# EUROPEAN PATENT APPLICATION

(11) **EP 4 262 050 A2**
(43) Date of publication of application: **18.10.2023**
(21) Application number: 23305534.2
(22) Date of filing: 11.04.2023
(51) Int. Cl.: H02J 9/08

(54) **DUAL-POWER SWITCHING SYSTEM AND METHOD FOR OPERATING THE SAME**

(30) Priority: 11.04.2022 CN 202210373424
(71) Applicant: SCHNEIDER ELECTRIC INDUSTRIES SAS, 92500 Rueil-Malmaison (FR)
(72) Inventor: BI, Baoyun, Shanghai 201203 (CN); HUANG, Jie, Shanghai 201203 (CN); WU, Wei, Shanghai 201203 (CN)
(74) Representative: Manitz Finsterwald Patent- und Rechtsanwaltspartnerschaft mbB

(57) **Abstract**

Embodiments of the present disclosure relate to a dual-power switching system and a method for operating the same. The dual-power switching system includes: an automatic transfer switch control module (101) configured to control an automatic transfer switch to be selectively switched between a main power source and a generator to supply power to a load; a generator delay control module (102) disposed on a circuit board independent of the automatic transfer switch control module. The generator delay control module includes: a control unit (103) configured to output a start signal after a preset delay to start the generator, in response to that the main power source is abnormal; a power source unit (104) adapted to supply power to the control unit when the main power source is not powered down and after the generator is started; and a first energy storage unit (105) adapted to supply power to the control unit within a time period after the main source is powered down and before the generator is started. The dual-power switching system disclosed herein may achieve the delay start with a low cost and a small size when the system is powered down, without using a storage battery.

## Description

### FIELD

Embodiments of the present disclosure generally relate to a dual-power switching system, and more specifically, to a dual-power switching system with an independent generator delay control module.

### BACKGROUND

In a dual-power switching system, in order to prevent a generator from being frequently started and stopped due to short-time voltage drops or interruptions of a main power source or the like, it is typically required to set a delay time between the occurrence of an abnormality of the main power source and the start of the generator. During the delay time, the energy of a controller for controlling the start of the generator is generally provided by an auxiliary power sources which is typically powered by the main power source or the generator. However, when the main power source is powered down, the auxiliary power source does not have an energy source, making the controller unable to start the generator and thus resulting in shutdown.

In order to solve the above-mentioned problem, the dual-power switching system is typically provided therein with a storage battery to supply power to the controller during power-down of the main power source. Nevertheless, since the storage battery is limited in service life and requires regular maintenance and replacement, the cost of the dual-power switching system is increased. In addition, as the storage battery is large in size, there is no way to miniaturize the dual-power switching system.

### SUMMARY

Embodiments of the present disclosure provide a dual-power switching system and a method for operating the same. The dual-power switching system includes an independent generator delay control module that may maintain the normal operation of the start circuit in the condition where the main power source is powered down, to at least partly solve the above-mention and other potential problems existing in the prior art.

A first aspect of the present disclosure relates to a dual-power switching system. The dual-power switching system may include: an automatic transfer switch control module configured to control an automatic transfer switch to be selectively switched between a main power source and a generator to supply power to a load; and a generator delay control module disposed on a circuit board independent of the automatic transfer switch control module, the generator delay control module including: a control unit configured to output a start signal after a preset delay to start the generator, in response to that the main power source is abnormal; a power source unit adapted to supply power to the control unit when the main power source is not powered down and after the generator is started; and a first energy storage unit adapted to supply power to the control unit within a time period after the main power source is powered down and before the generator is started.

In the above embodiment, as compared with a conventional controller of the dual-power switching system, the generator delay control module requires much less energy for normal operation during a time period after the main power source is powered down and before the generator is started, and the energy to be stored in the first energy storage unit is greatly reduced accordingly, thereby reducing the cost and implementing the miniaturization of the dual-power switching system.

According to an embodiment, the control unit determines that the main power source is powered down in response to that a voltage of the power source unit is less than a threshold. With the above embodiment, accurate determination of the abnormality of the main power source may be implemented.

According to an embodiment, the power source unit is configured to draw energy from the main power source or the generator, and to charge the first energy storage unit when the main power source is not powered down and after the generator is started. With the above embodiment, it may be achieved to further reduce the capacity required by the first energy storage unit, thus further miniaturizing the first energy storage unit.

According to an embodiment, the generator delay control module further includes a switching unit configured to disconnect the power source unit from the control unit and connect the first energy storage unit to the control unit in response to that the main power source is powered down and the generator is not started, and to connect the power source unit to the control unit and disconnect the first energy storage unit from the control unit in response to that the main power source is not powered down or the generator has been started. With the above embodiment, it may prevent the first energy storage unit form supplying power to other circuits than the generator delay control module, and further reduce the capacity required by the first energy storage unit, thus further miniaturizing the first energy storage unit.

According to an embodiment, the generator delay control module further includes a start unit configured to output a pulse signal in response to the start signal, to start the generator. With the above embodiment, since the start unit requires quite little energy, the capacity required by the first energy storage unit may be further reduced.

According to an embodiment, the generator delay control module further includes a second storage energy unit configured to draw energy from the power source unit and supply power to the start unit. With the above embodiment, since the energy required by the start unit need not be supplied by the first energy storage unit, the capacity required by the first energy storage unit may be further reduced.

According to an embodiment, the start unit includes a bi-stable relay. With the above embodiment, a start signal may be stably output in the event of a power down.

According to an embodiment, the first energy storage unit includes a supercapacitor. With the above embodiment, as the supercapacitor has a long service life, the problems in terms of service life, replacement and the like resulting from use of a battery may be avoided.

A second aspect of the present disclosure relates to a method for operating a dual-power switching system which is adapted to be selectively switched between a main power source and a generator to supply power to a load, and includes an automatic transfer switch control module and a generator delay control module disposed on a circuit board independent of the automatic transfer switch control module. The method includes: supplying, by a power source unit of the generator delay control module, which is powered by the main power source, power to a control unit of the generator delay control module when the main power source is not powered down, the control unit being configured to output a start signal after a preset delay to start the generator when the main power source is abnormal; and supplying, by a first energy storage unit of the generator delay control module, power to the control unit during a time period after the main power source is powered down and before the generator is started.

According to an embodiment, the method may include supplying, by the power source unit powered by the generator, power to the control unit after the generator is started.

According to an embodiment, the method further includes: determining whether the main power source is abnormal; and determining whether a voltage of the power source unit is less than a threshold to detect whether the main power source is powered down.

### BRIEF DESCRIPTION OF THE DRAWINGS

The above and other objectives, features, and advantages of the present disclosure will become more apparent, through the following detailed description with reference to the accompanying drawings. In the drawings, a plurality of embodiments of the present disclosure are described in an exemplary and non-limiting manner, where:
Fig. 1 illustrates a schematic diagram of an application scenario of a dual-power switching system according to an embodiment of the present disclosure;
Fig. 2 illustrates a schematic diagram of a dual-power switching system according to an embodiment of the present disclosure;
Fig. 3 illustrates a schematic diagram of a dual-power switching system according to another embodiment of the present disclosure;
Fig. 4 illustrates a schematic diagram of a dual-power switching system according to a further embodiment of the present application;
Fig. 5 illustrates a schematic diagram of a dual-power switching system according to a still further embodiment of the present disclosure; and
Fig. 6 illustrates a flowchart of a method for controlling a dual-power switching system according to an embodiment of the present disclosure.

### DETAILED DESCRIPTION OF EMBODIMENTS

Reference now will be made to various exemplary embodiments as shown in the drawings to describe the principle of the present disclosure. It would be appreciated that the description on those embodiments is provided merely to enable those skilled in the art to better understand and further implement the present disclosure, rather than suggesting any limitations to the scope of the present disclosure. Similar or same reference symbols, which refer to the similar or same functions, are employed, if possible, throughout the drawings. Those skilled in the art would easily realize that the alterative embodiments of the structure and method described below may be used, without departing from the principle of the present disclosure.

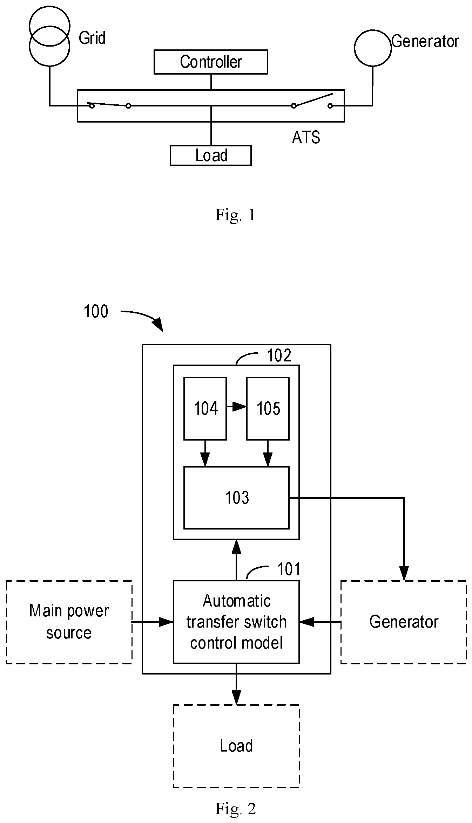

Hereinafter, reference will be made to Fig. 1 to describe in detail an application scenario of a dual-power switching system according to an embodiment of the present disclosure. Fig. 1 illustrates a schematic diagram of a dual-power switching system.

As shown in Fig. 1, the dual-power switching system includes an Automatic Transfer Switch (ATS) and a controller. When a main power source grid is operating normally, the controller controls the ATS to connect the grid to a load to supply power to the latter. When the grid is abnormal, the controller sends a start signal to start a generator and controls the ATS to connect the generator to a load to supply power to the latter.

In practice, short-time voltage drops or interruptions often occur in the grid. In the case of such short-time abnormality, the generator will be started and stopped frequently, adversely impacting the service life of the generator. Therefore, the controller is typically designed to send a start signal after a delay time. During the delay start period, if the grid voltage is restored to normal, no start signal will be sent. In this way, the generator may be prevented from being started and stopped frequently.

However, during the delay start period, it needs to guarantee the power supply to the controller so that the start signal may be sent upon the end of the delay time. In general, the controller is powered by the grid or the generator. When the grid is normal, the controller is powered by the grid. When the grid is abnormal and if the grid has not been powered down yet, the controller is still powered by the grid during the delay start period. However, if the grid is powered down, the grid cannot continue to supply power to the controller, nor can the controller send the start signal upon the end the of the delay time.

In order to solve the above-mentioned problem, the controller is typically provided with a 12V/24V storage battery. When the grid is powered down, the storage battery is used to supply power to the controller, thus ensuring that the controller can send the start signal upon the end of the delay time.

However, the storage battery which is limited in service life requires regular maintenance and replacement, thus increasing the cost. Meanwhile, as the storage battery is large in size, there is no way to implement miniaturization.

Hereinafter, reference will be made to Figs. 2-6 to describe in detail a dual-power switching system according to exemplary embodiments of the present disclosure. Referring to Fig. 2, Fig. 2 illustrates a structural diagram of a dual-power switching system according to an embodiment of the present disclosure.

As shown in Fig. 2, a dual-power switching system 100 includes an automatic transfer switch control module 101 and a generator delay control module 102. Wherein, the automatic transfer switch control module 101 is configured to control an automatic transfer switch to be selectively switched between a main power source and a generator, so as to supply power to a load. The generator delay control module 102 is configured to output the start signal after a preset delay to start a generator, in response to that the main power source is abnormal. The generator delay control module 102 is disposed on a circuit board independent of the automatic transfer switch control module 101.

As shown in Fig. 2, the generator delay control module 102 includes a control unit 103, a power source unit 104 and a first energy storage unit 105. The control unit 103 is configured to output the start signal after the preset delay to start a generator, in response to that the main power source is abnormal. The power source unit 104 is adapted to supply power to the control unit 103 when the main power source is not powered down and after the generator is started. The first energy storage unit 105 is adapted to supply power to the control unit 103 within a time period after the main power source is powered down and before the generator is started.

When the main power source is operating normally, the automatic transfer switch control module 101 controls the automatic transfer switch to connect the main power source to the load. At this time, the power supply 104 is connected to the main power source, to supply power to the control unit 103 and charge the first energy storage unit 105.

When the main power source is abnormal, the control unit 103 determines whether the main power source is powered down. If the main power source is not powered down, the control unit 103 is still powered by the power source unit 104 and outputs the start signal after the preset delay to start the generator. If the main power source has been powered down, the control unit 103 is powered by the first energy storage unit 105 and outputs the start signal after the preset delay to start the generator.

If the main power source is in the condition of under-voltage, over-voltage, under-frequency, over-frequency, three-phase imbalance and the like, the automatic transfer switch control module 101 determines that the main power source is abnormal and communicates to the control unit 103 the information about the abnormity of the main power source is abnormal, to cause the control unit 103 to send the start signal after the preset time; and when the voltage of the power source unit 104 is less than a threshold, the control unit 103 determines that the main power source is powered down, and then is powered by the first energy storage unit 105 and sends the start signal after the preset delay.

After the generator is started, the automatic transfer switch control module 101 is powered by the generator, and the automatic transfer switch connects the generator to the load. At this time, the power source unit 104 is connected to the generator, to supply power to the control unit 103 and charge the first energy storage unit 105.

In the above embodiments, the control unit 103 is only used to implement the function of outputting the start signal after the preset delay in response to that the main power source is abnormal. Since less energy is required to implement this function, an energy storage element with a small capacity may be employed, to thus avoid using a storage battery, reduce the cost, and miniaturize the dual-power switching system.

In some embodiments, the control unit 103 may be, for example, a single chip microcomputer. In other embodiments, the control unit 103 may be other control devices, which may be determined according to the specific design requirement and the cost.

In some embodiments, the power source unit 104 may be, for example, a switching power source module, an input of which is the main power source or the generator. In other embodiments, the power source unit 104 may also be other types of power source structures, which may be determined according to the specific design requirement and the cost.

In some embodiments, the first energy storage unit 105 may be, for example, a supercapacitor. In other embodiments, the first energy storage unit 105 may be other types of energy storage elements, which may be determined according to the specific design requirement and the cost.

In some embodiments, determining whether the main power source is abnormal may be implemented by determining whether the voltage or frequency of the main power source is within a preset range. In other embodiments, determining whether the main power source is abnormal may be implemented in other manners, which may be determined according to the specific design requirement and the cost.

In some embodiments, the threshold may be, for example, 2.9V. In other embodiments, the threshold may be other values, which may be determined according to the specific design requirement and the cost.

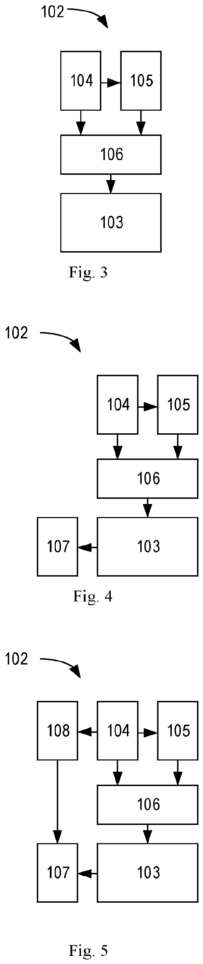

Fig. 3 illustrates a schematic diagram of a dual-power switching system according to another embodiment of the present disclosure. As shown therein, the generator delay control module 102 further includes a switching unit 106. The switching unit 106 is configured to: disconnect the power source unit 104 from the control unit 103 and connect the first energy storage unit 105 to the control unit 103, in response to that the main power source is powered down and the generator has not been started yet; and to connect the power source unit 104 to the control unit 103 and disconnect the first energy storage unit 105 from the control unit 103, in response to that the main power source is not powered down or the generator has been started.

Through the above embodiments, the first energy storage unit 105 can supply power to the control unit 103 only during the delay start period, thereby further lowering the requirement for the capacity of the first energy storage unit 105 and further reducing its size.

In some embodiments, the switching unit 106 may be formed, for example, by a MOS transistor. In other embodiments, the switching unit 106 may be formed by other switching devices, which may be determined according to the specific design requirement and the cost.

Fig. 4 illustrates a schematic diagram of a dual-power switching system according to a further embodiment of the present disclosure. As shown therein, the generator delay control module 102 further includes a start unit 107. The start unit 107 is configured to output a pulse signal in response to the start signal, to start the generator.

In the above embodiment, since it is only required to output a pulse signal, the start circuit 107 needs quite little energy. As such, the requirement for the capacity of the energy storage unit may be further reduced, and its size may be further reduced.

In some embodiments, the start circuit 107 may be formed, for example, by a bi-stable relay. In other embodiments, the start circuit 107 may be formed by other devices, which may be determined according to the specific design requirement and the cost.

Fig. 5 illustrates a schematic diagram of a dual-power switching system according to a still further embodiment of the present disclosure. As shown therein, the generator delay control module 102 further includes a second energy storage unit 108. The second energy storage unit 108 is configured to draw energy from the power source unit 104 and supply power to the start unit 107.

In the above embodiment, since the energy required by the start circuit 107 is provided by the second energy storage unit 108, it may further lower the requirement for the capacity of the energy storage unit 105 and further reduce its size.

In some embodiments, since the start circuit 107 requires quiet little energy, the second energy storage unit 108 may be, for example, an aluminum electrolytic capacitor. In other embodiments, the second energy storage unit 108 may be formed by other energy storage elements, which may be determined according to the specific design requirement and the cost.

In some embodiments, the generator delay control module 102 further includes a stop unit (not shown). The stop unit is configured to stop the generator in response to detecting that the main power source is restored to supply power. In some embodiments, the stop unit may be formed, for example, by a bi-stable relay. In other embodiments, the stop unit may be formed by other devices, which may be determined according to the specific design requirement and the cost.

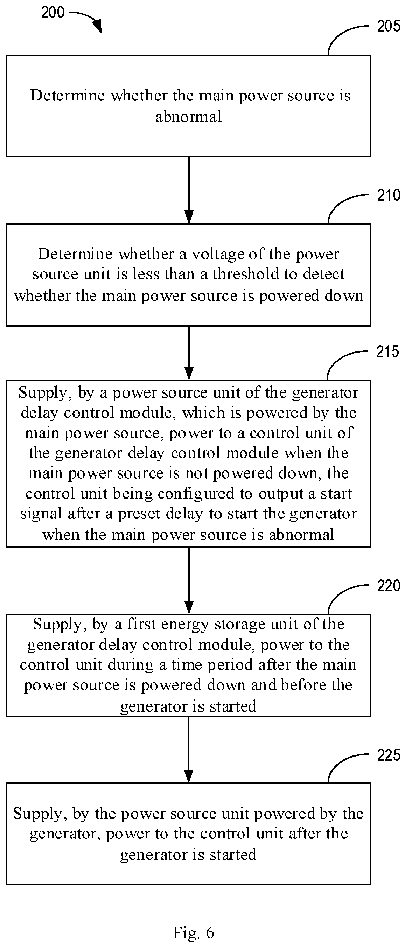

Hereinafter, reference will be made to Fig. 6 to describe in detail a method for controlling a dual-power switching system according to an exemplary embodiment of the present disclosure. Fig. 6 illustrates a flowchart of a method for controlling a dual-power switching system according to an exemplary embodiment of the present disclosure. The dual-power switching system is adapted to be selectively switched between a main power source and a generator. The dual-power switching system includes an automatic transfer switch control module 101 and a generator delay control module 102 disposed on a circuit board independent of the automatic transfer switch control module 101.

In the embodiment as shown in Fig. 6, the method includes, in step 205, determining whether the main power source is abnormal.

In step 210, in the event of determining that the main power source is abnormal, determining whether a voltage of the power source unit 104 is less than a threshold is performed to detect whether the main power source is powered down.

In step 215, in the event that the main power source is not powered down, the power source unit 104 of the generator delay control module 102, which is powered by the main power source, supplies power to the control unit 103 of the generator delay control module 102, and the control unit 103 is configured to output the start signal after the preset delay when the main power source is abnormal, to start the generator.

In step 220, within a period from the power-down of the main power source to the start of the generator, the control unit 103 is powered by the first energy storage unit 105 of the generator delay control module 102.

In step 225, after the generator is started, the control unit 103 is powered by the power source unit 104, which is in turn powered by the generator.

According to the embodiments of the present disclosure, a delay start of the generator is implemented via an independent generator delay control module, and the generator delay control module requires quite little energy and thus may be powered by an energy storage element with a small capacity, without using a storage battery. In this way, the cost of the dual-power switching system may be reduced, and miniaturization of the dual-power switching system may be achieved.

Although the claims of the present disclosure are formulated for a specific combination of features, it would be appreciated that the scope of the present disclosure also cover any novel feature or combination of features explicitly or implicitly disclosed therein or generalized in any manner, irrespective of relating to the same solution of any claim currently claimed. On the basis, it would be indicated by the applicant that new claims may be formulated for those features and/or a combination thereof during the execution of the present application or any further application derived therefrom.

## Claims

1. A dual-power switching system (100), comprising:
an automatic transfer switch control module (101) configured to control an automatic transfer switch to be selectively switched between a main power source and a generator to supply power to a load; and
a generator delay control module (102) disposed on a circuit board independent of the automatic transfer switch control module (101), the generator delay control module (102) comprising:
a control unit (103) configured to output a start signal, after a preset delay, to start the generator, in response to that the main power source is abnormal;
a power source unit (104) adapted to supply power to the control unit (103) when the main power source is not powered down and after the generator is started; and
a first energy storage unit (105) adapted to supply power to the control unit (103) within a time period after the main power source is powered down and before the generator is started.

2. The dual-power switching element (100) of claim 1, wherein the control unit (103) determines that the main power source is powered down in response to that a voltage of the power source unit (104) is less than a threshold.

3. The dual-power switching element (100) of claim 1, wherein the power source unit (104) is configured to draw energy from the main power source or the generator, and to charge the first energy storage unit (105) when the main power source is not powered down and after the generator is started.

4. The dual-power switching element (100) of claim 1, wherein the generator delay control module (102) further comprises a switching unit (106) configured to disconnect the power source unit (104) from the control unit (103) and connect the first energy storage unit (105) to the control unit (103) in response to that the main power source is powered down and the generator is not started, and to connect the power source unit (104) to the control unit (103) and disconnect the first energy storage unit (105) from the control unit (103) in response to that the main power source is not powered down or the generator has been started.

5. The dual-power switching system (100) of claim 1, wherein the generator delay control module (102) further comprises a start unit (107) configured to output a pulse signal, in response to the start signal, to start the generator.

6. The dual-power switching system (100) of claim 5, wherein the generator delay control module (102) further comprises a second storage energy unit (108) configured to draw energy from the power source unit (104) and supply power to the start unit (107).

7. The dual-power switching system (100) of claim 5, wherein the start unit (107) comprises a bi-stable relay.

8. The dual-power switching system (100) of claim 1, wherein the first energy storage unit (105) comprises a supercapacitor.

9. A method (200) for operating a dual-power switching system which is adapted to be selectively switched between a main power source and a generator to supply power to a load and comprises an automatic transfer switch control module (101) and a generator delay control module (102) disposed on a circuit board independent of the automatic transfer switch control module (101), the method (200) comprising:
supplying, by a power source unit (104) of the generator delay control module (102), power to a control unit (103) of the generator delay control module (102) when the main power source is not powered down, the power source unit (104) being powered by the main power source, the control unit (103) being configured to output a start signal after a preset delay to start the generator (215) when the main power source is abnormal; and
supplying, by a first energy storage unit (105) of the generator delay control module (102), power to the control unit (103) during a time period after the main power source is powered down and before the generator is started (220).

10. The method of claim 9, further comprising: supplying, by the power source unit (104) powered by the generator, power to the control unit (103) after the generator is started (225).

11. The method of claim 9, further comprising:
determining whether the main power source is abnormal (205); and
determining whether a voltage of the power source unit (104) is less than a threshold to detect whether the main power source is powered down (210).
